# EUROPEAN PATENT SPECIFICATION

(11) **EP 1 106 055 B1**
(45) Date of publication and mention of the grant of the patent: **25.06.2003**
(21) Application number: 01200325.7
(22) Date of filing: 23.04.1997
(51) Int. Cl.: A01F 15/02

(54) **A bale press**
Ballenpresse
Presse à balles

(30) Priority: 25.04.1996 NL 1002947
(43) Date of publication of application: 13.06.2001
(62) Divisional of application: 97201210.8
(73) Proprietor: MAASLAND N.V., 3155 PD Maasland (NL)
(72) Inventor: van der Lely, Olaf, 6300 Zug (CH); Wilkens, Dieter, 38302 Wolfenbüttel (DE)
(74) Representative: Corten, Maurice Jean F.M.

(56) References cited:
- EP-A- 0 009 850
- EP-A- 0 315 521
- DD-A- 92 339
- DE-C- 3 809 132
- GB-A- 2 207 084
- US-A- 4 158 994
- US-A- 5 081 922

## Description

The present invention relates to a bale press provided with a compression chamber including a ram for pressing material to be formed into a bale, which ram is movable in a reciprocating manner, which bale press is provided with a tying device for tying bales.

Such bale presses are known. In the modern versions thereof, in particular the so-called bigbalers, there are achieved high densities of 250 kg per cubic metre and more. The advantages of such densities are: favourable possibilities of transport, smaller storage space required and a good conservation quality of the pressed material. In this connection the present invention aims at achieving an even higher density, in particular a maximum density, of the pressed bales.

In accordance with the invention, this is achieved in a construction as described in the characterizing part of the following main claim. Such a construction is economical.

A further specific embodiment of the bale press according to the invention relates to a bale press provided with a post-compression device comprising a pressing element on which an adjusting element is operating, on which adjusting element a vibrator device is acting, while by means of the above-mentioned device there is exerted a post-compression pressure on the material to be pressed. Said vibrator device may comprise an eccentric mechanism, such as a motor-driven shaft having one or more cams provided along its circumference. In a preferred embodiment, such a vibrator device has a frequency being at least a factor 10 greater than the frequency of the ram of the conventional pressing device. Such a post-compression device will promote the setting of the bale, i.e. the mutual arrangement of the material elements present in the bale, and will thus contribute to achieving the maximum density of a bale.

For a better understanding of the invention, reference will now be made to the accompanying drawings, in which:
Figure 1 shows schematically, in side view, a bale press according to the invention;
Figure 2 is a cross-section taken on the line II - II in Figure 1;
Figure 3 is a view according to the arrow III in Figure 2;
Figure 4 shows schematically part of a so-called conveyor bale press provided with a post-compression device according to the invention;
Figure 5 shows a bale press provided with three compression chambers according to the invention;
Figure 6 shows schematically, in a partially represented plan view, an alternative embodiment of a post-compression device in a conveyor bale press, and
Figure 7 is a view according to the arrow VII in Figure 6.

Corresponding elements in the drawings are indicated by the same reference numerals. The invention is by no means restricted to the embodiments shown and described; they only serve to illustrate the inventive idea.

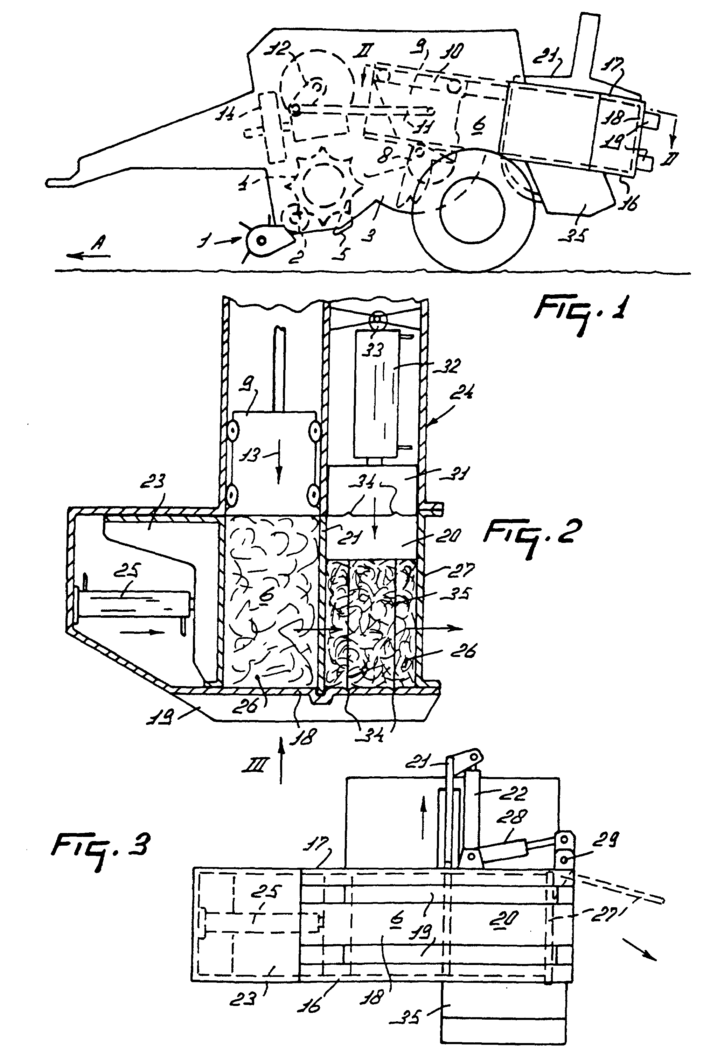

Figure 1 shows a bale press in a drawn position. The bale press comprises a pick-up element 1 for picking up material lying on the ground, such as crop, e.g. hay or straw, a displacing member 2, cooperating with the pick-up element 1, for displacing picked up material in the lateral direction of the machine to a central supply opening of the machine, to which supply opening a conveyor channel 3 is connected. In the conveyor channel 3 there is arranged a rotor 4 for ensuring the conveyance of crop in said conveyor channel. Optionally, the rotor 4 will cooperate with a row of knives 5, capable of being put into and out of operation, arranged transversely to the direction of conveyance, for processing the material picked up into shorter lengths. The conveyor channel 3 extends beyond the rotor 4 via a curve in upward direction and debouches into the front part of a compression chamber 6 extending transversely to the conveyor channel 3 and substantially in the direction of travel A. In the present embodiment, viewed in a cross-section transversely to the direction of compression in the compression chamber 6, said compression chamber 6 is rectangular. In the compression chamber 6 a ram 9, also to be designated as a pressing block or pressing element 9, is movable in a reciprocating manner in a straight line of the direction of compression 13, in the present embodiment via a straight guide means 10. The direction of compression 13 is parallel to the longitudinal direction of a bale formed in the compression chamber 6. The ram 9 is driven by means of a drive mechanism including a connecting rod 11 which is pivotably connected at one end to said ram 9 and at the other end to a rotatable drive arm 12 which is driven about a shaft. The drive mechanism also comprises a fly wheel 14 connected to the drive arm 12. The drive mechanism may be coupled with a power take-off shaft of a tractor and may, alternatively, be provided with an own motor.

Figure 2 shows the ram 9 in an outermost position in the compression chamber 6, which is confined by a lower and an upper lying fixed wall, a rearmost fixed wall 18 extending transversely to the direction of the stroke of the ram 9, which wall 18 is provided in the present embodiment with a stiffening 19 constituted by a U-profile. The compression chamber 6 is further constituted by two movable upright walls. One of these walls, the partition 21, separates the compression chamber 6 from a so-called post-compression chamber 20 and, in the present embodiment, is included in the machine so as to be movable in at least one of its directional components. For that purpose, the partition 21 is movable by means of an adjusting element 22, such as a hydraulic cylinder, which is automatically controlled by means of a sequence switch system pertaining to the machine. In the present embodiment, the partition 21 is lifted vertically, over at least the height of a bale 26 pre-formed in the compression chamber 6, from its position during operation, such that the pre-formed bale 26 can be moved under the wall 21.

The other upright wall of the compression chamber 6 is constituted by a slide 23 movable transversely to the direction of the stroke of the ram 9. For that purpose, an adjusting element 25, constituted by a hydraulic cylinder, is acting thereon. The adjusting element 25 is also automatically controlled by means of the aforementioned sequence switch system pertaining to the machine. In the wall 18 there are further provided non-shown pressure sensors. After it has been automatically established that an (adjustable) threshold value in the pressure in the compression chamber 6 observed by the sensors has been exceeded, by means of said pressure sensors the adjusting elements 25 and 22 are automatically controlled consecutively in such a manner that, by means of the slide 23 and the adjusting element 25, a bale 26 pre-formed in the compression chamber 6 will be displaced to an adjacent processing chamber 20, also to be designated as a post-compression chamber 20.

According to the invention, displacement to the chamber 20 will be possible in an alternative manner after there has been detected by a detector, e.g. an optical detector, cooperating with a sequence switch system pertaining to the bale press that the compression chamber is filled, or each time after a number of strokes of the ram 9, which number is adjustable in the sequence switch system.

The post-compression chamber 20, which constitutes part of a post-compression device 44 and equals in size the volume of a pre-compressed bale 26, comprises a wall 27 arranged in the longitudinal direction of the bale 26, i.e. in the direction of the stroke of the ram 9. The wall 27 is pivotable about a shaft 29 via an adjusting element 28 in such a manner that through the created opening a bale can be removed from the post-compression chamber 20. In the post-compression chamber 20 a pressing element 31, movable parallel to the ram 9, can be displaced by means of an adjusting element 32 constituted by a hydraulic cylinder. In the rear wall of the post-compression chamber 20, constituted in this case by the produced part of the wall 18, and in the bottom wall of said post-compression chamber 20, which bottom wall is in an analogous manner a continuation of the lower fixed wall 16, there are provided recesses 34. Said recesses 34 are adapted to accommodate tying elements 35, such as cords, for tying a bale whether or not post-compressed together. With the present post-compression device there can be achieved for the material hay a density which is considerably higher than 250 kg/m3. For the purpose of tying or wrapping a pre-formed, possibly post-compressed bale, the machine is provided with a tying device 35 which is for the greater part a conventional one. In accordance with the invention, there is included a tying device active in the processing chamber 20. However, said tying device may also be disposed in a second further processing chamber. It will be possible to deposit a post-compressed bale into said second further processing chamber and to remove same therefrom in an analogous manner as described above.

The function of the machine described in the foregoing will be as follows.

The material picked up by means of the pick-up member 1, collected in the compression chamber 6, and pressed by means of the ram 9, will obtain an estimated maximum density, which will be automatically established by means of the aforementioned sensors in the rearmost wall 18. In accordance with the invention, the estimated maximum pressure will constitute an adjustable threshold value in the machine. When the pressure established in the machine has exceeded this threshold value, the partition 21 will automatically be put out of the position in which it separates the compression chamber 6 from the post-compression chamber 20, and the adjusting element 25 will be activated immediately after the ram 9 has reached its outermost position. In a previous stage the partition 21 and the pivotable wall 27 have been operated, so that a bale pre-formed in the compression chamber 6 will be shifted into the post-compression chamber 20 and a ready bale, whether or not post-compressed and tied together, which may be present therein, will be pushed out of the post-compression chamber 20 by the pre-formed bale 26, i.e. via the opening created by the pivotal movement of the wall 27. After the slide 23, the partition 21 and the wall 27 have returned into their initial position, via the recesses 34 there will be disposed tying elements 35 around the pre-formed bale 26 present in the post-compression chamber 20, whereafter, via the adjusting element 32 and the pressing element 31, there will be exerted automatically and during an uninterrupted period of time an at least comparatively constant pressure on the bale. Consequently the material in the bale will set and transform and the bale will gradually become more compact. The post-compression device according to the invention ensures inter alia by the magnitude and the continuous character of the pressure exerted thereby that relaxation of the pressed material, i.e. springing back of the compressed material after compression, will not occur. According to the hypothesis on which the invention is based this is a result of mutual arrangement or "setting" of material elements and of permanent changes in the material occurring under the influence of said factors. The vibration frequency is a factor 10 to 100 greater than that of the ram 9, which may amount to 10 to 100 strokes per minute.

In a specific embodiment according to the invention, there is included a vibrator device 33 in the post-compression device. Said vibrator device 33 comprises a preferably hydraulically driven eccentric mechanism by means of which there can be exerted a high pressure on the bale to be post-compressed, said pressure varying at a high frequency within a small margin. For example, such a mechanism may be disposed at one of the two ends of the adjusting element 32, e.g. between the adjusting element 32 and the pressing element 31, or, as shown, between the adjusting element 32 and the frame of the bale press. The embodiment represented in Figure 2 shows a disc disposed eccentrically on a vertical shaft, at the lower side of which there is arranged a hydraulically driven motor, said motor and said shaft both being supported against the frame via two laterally extending triangular supports. In a preferred embodiment, there is also provided a support arranged in the direction of compression. Such a vibrator device has a vibrating effect on the pressure applied on the bale to be post-compressed and will promote the "setting" of the material in the bale to be post-compressed. The vibrator device 33 described here is also applicable in the versions of the post-compression device described hereafter. The amplitude of the vibrator device is so small that the relatively high pressure acting on the bale to be post-compressed will remain comparatively constant, partly because of the high pressure of the adjusting element 32.

After there has been automatically established by means of the aforementioned sensors in the compression chamber 20 that the pressure has reached a pre-adjustable percentage of the threshold value, e.g. 80% thereof, the tying elements 35 will be pulled and be knotted in a conventional manner and the pressing element 31 will be automatically brought into an initial position in which the pressing surface is located in the produced part of the pressing surface of the ram 9 when the latter is in its outermost position. Then the pressing surface of the pressing element 31 will constitute a guide means for displacing a pre-formed bale 26 from the compression chamber 6 to the compression chamber 20. After the pressing element 31 has returned into its initial position and the ram 9 has returned into its outermost position, the pressing and post-compressing process described is repeated. In a preferred embodiment of the invented construction, there is included in the post-compression device a measuring member by means of which the length of the bale obtained during post-compression is determined. For that purpose, in the present embodiment, there is included in the post-compression chamber an infrared detector cooperating with the sequence switch system. In an alternative embodiment, the pressing element 31 will control during its displacement a switch which is movably included in the post-compression device, said switch constituting part of the sequence switch system.

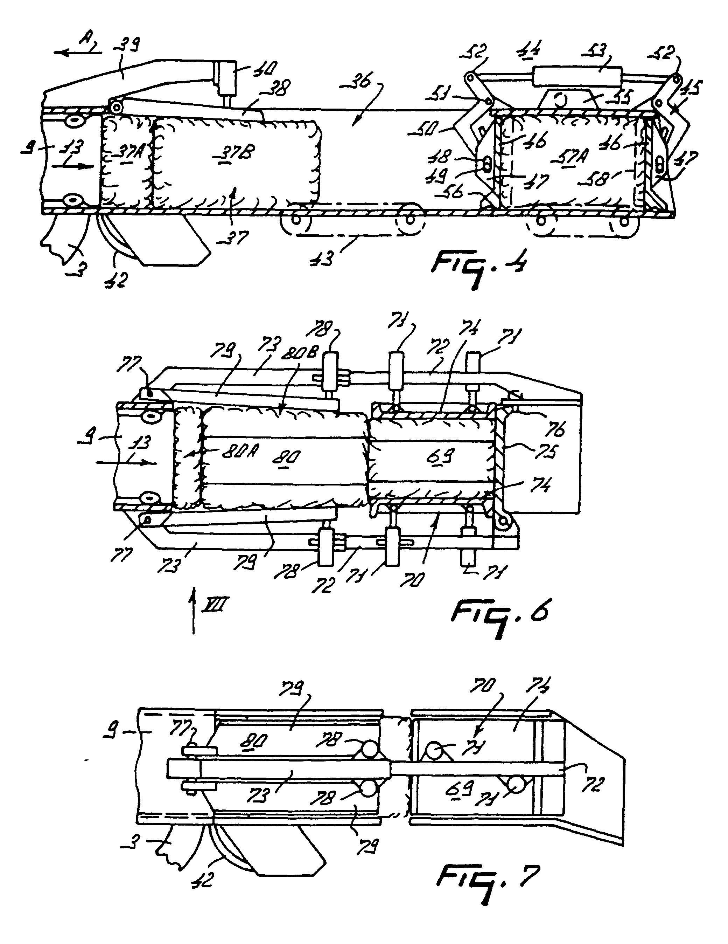

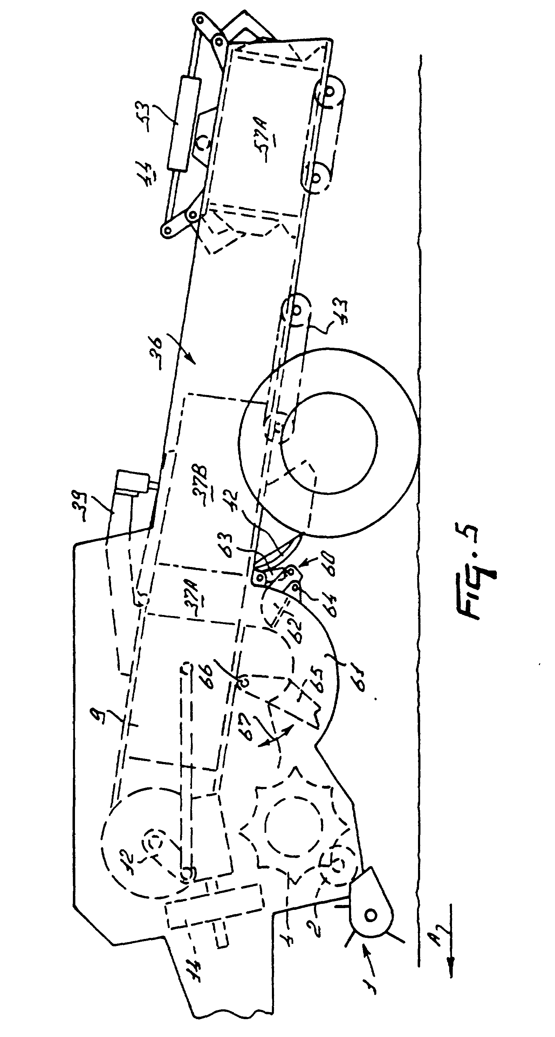

Figure 4 shows schematically the compression chamber 36 of an alternative embodiment of the bale press according to the invention. This alternative embodiment is based on a rectangular conveyor bale press, a so-called "Strangpresse", which is regularly available on the market. Said bale press is provided in a customary manner with a conveyor channel 3, a ram 9 and a non-shown pair of upright side walls, which, seen in plan view, are movable into a position which is somewhat tapering in rearward direction. The relevant compression channel 36 is shown in broken lines. In the present embodiment, in the region of these side walls there is also provided an upper wall portion 38 which, like the side wall portions, is disposed movably in the direction of the imaginary longitudinal centre line of the compression channel 36. For that purpose, near the rearmost end of the upper wall portion 18, via a support 39, there is included an adjusting element 40 in the machine. The upper wall 38 and the other wall portions in that region determine a conventional compression chamber 37. In the compression chamber 37 there are shown a bale 37A, which is in its formation process, and a bale 37B, which has been formed. The bale 37B offers the resistance required at the rear side of the bale 37A for the formation of a proper bale. For allowing the side wall portions to perform a corresponding movement, directed to the imaginary centre line, the upper wall portion 38 is tapering rearwardly, i.e. opposite to the direction of travel of the machine. The machine is further provided with a commonly used tying device including needles 42 for winding tying elements 35 round a pressed bale.

In the present embodiment, the machine is provided with drive elements 43, reaching beyond the boundaries of the compression chamber, such that a bale 37B, which has been formed and tied, is capable of being seized for being transported in rearward direction to the compression chamber 57 of a post-compression device 44 provided in the machine near the rear side of the compression channel 36. By means of the post-compression device 44 a formed bale is post-compressed during the formation of a new bale such that a bale pressed in a conventional manner is compressed. For that purpose the post-compression device 44 comprises pushing members 45 including an abutment element 46, here constituted by a heavy plate whose size corresponds to the cross-section of the compression chambers 37 and 57. On said abutment element 46 there are disposed pairs of ribs 47 made of plate material and extending substantially upwardly. Said pairs of ribs are provided with a slotted hole 48 in which a hinge pin 49 is movable, via which hinge pin 49 a hook-shaped arm 50 is pivotably connected to an abutment element 46. An arm 50 is pivotable about a shaft 51, included in the machine transversely to the longitudinal direction of the compression channel 36, and is provided with a lever portion 52 which is hingeably engaged by an automatically controlled adjusting element 53. In accordance with the preferred embodiment shown, the post-compression device 44 is provided with two mirrorwise arranged pushing members 45, each acting on a longitudinal end of a formed bale 57A, which pressing members are activated by means of a common adjusting element 53, here constituted by a hydraulic adjusting cylinder, disposed in the longitudinal direction of the compression channel 36 between the two lever portions 52. During the formation of a bale 37A the drive elements 43 are in a freely rotatable position and are activated exclusively for displacing a bale 37B, which has been formed and tied, to the post-compression device 44.

The post-compression device 44 further comprises a knotting device 55 provided with non-shown hooks which are capable of engaging the tying elements 35 of a formed bale in order to shorten same by means of a rotating movement. As a result thereof the tying elements 35 will obtain a wound portion in which two element parts, constituting possible ends, are interwoven under such a force that the interwoven part constitutes a knot which will not come loose. The knotting device 55 is further provided with a pressing member including chisel-like but blunt projections by means of which the wound portion of the tying elements 35 can be pressed into the pressed material. This will minimize the risk that the wound portion will still come loose. The tying elements 35 are cut from the hooks with the aid of a knife pertaining to the knotting device.

In one of the four longitudinally orientated walls of the compression channel 36, in the embodiment shown in the upper wall, there is provided a recess, indicated in the drawing by broken lines, via which recess the foremost abutment element 46 can be pivoted out of the compression chamber 37. An abutment element 46 is provided, at least near one circumferential edge, with a foot 56 ensuring a uniform movement of the guide member into and out of the post-compression chamber 57. Said post-compression chamber 57 constitutes part of the compression channel 36 and is located behind the compression chamber 37 and the opening for pivoting out of the compression channel 36 of the foremost pushing member 45. An abutment element 46 is provided at its circumference with recesses for the passage of a drive element 43. The latter may be designed either as a disc-shaped element or as an endless flexible element, such as a chain. The drive element 43 may be disposed in each of the four walls of the compression channel 36 and may be produced in duplicate, e.g. in two walls facing each other. The dash lines 58 in the drawing represent the volume of the bale 57A to be reached after post-compression. The bale 57A will then have a density approximating the maximum density to be reached.

Figure 5 shows a bale press, which, in accordance with the invention, is provided with three compression chambers 61, 6 and 57. In the conveyor channel 3 the bale press is provided with a pre-compression device 60 as well as a pre-compression chamber 61 created in said conveyor channel 3. The compression chamber 6 shown in the figure may also be constituted by one of the other described conventional compression chambers 37 and 80, like the shown post-compression chamber 57 and post-compression device may be constituted by one of the other described constructions of a post-compression chamber and post-compression device. The pre-compression chamber 61 is confined at its end located near the compression chamber 37 by some knife-like elements 62, provided side by side in the direction of travel A and extending vertically via recesses in a wall of the conveyor channel 3, and is confined near the supply opening of the conveyor channel 3 by a pushing member including knife-like elements 65. By means of an adjusting element 63 the knife-like elements 62 are pivotable about a common shaft 64 from a position releasing the conveyor channel 3. In an active position the knife-like elements 62 extend with a straight side transversely to the direction of conveyance in the conveyor channel 3 and over the entire depth thereof, so that the material picked up by the machine will be stopped in the conveyor channel 3. The knife-like elements 65 of the pushing member are arranged in an imaginary vertical plane extending in the direction of travel A and fastened about a common shaft 66. Like the knife-like elements 62, the knife-like elements 65 extend into the relevant wall portion of the conveyor channel 3 through local slots so as to be fitted therein. In the present embodiment, the shaft 66 is driven in such a manner that the pushing member near the entrance of the conveyor channel 3 will perform, in a repeated movement, a number of short strokes according to the double arrow 67, followed by a long stroke at which the knife-like elements 62, prior to the long stroke, will automatically have pivoted out of the conveyor channel in such a way that the material collected and pre-compressed between the knife-like elements 62 and the pushing member will be moved into the compression chamber 6, 37, 80 respectively by means of the pushing member. The rear sides of the knife-like elements 65 of the pushing member are produced as sharp ones, so that, in the bale press in accordance with the invention, said pushing member will exert, in a backward movement in cooperation with the upper wall of the initial part of the conveyor channel 3, an additional cutting function on the picked up material. It will be possible to include the pre-compression device 60 in the machine in combination with each of the post-compression devices described. The pre-compression device 60 ensures that material picked up by the machine will each time be placed in a relevant compression chamber so as to be arranged therein in columns over the entire height of said compression chamber and equally pressed within the relevant column. This will promote the desired equal density of a bale to be pressed.

Figures 6 and 7 show a further alternative embodiment in which a post-compression device 70 movable together with the pressed bales is disposed in a conventional rectangular conveyor press, i.e. a "Strangpresse". In this embodiment adjusting elements 71 are arranged transversely to the longitudinal direction of the relevant compression channel for pushing the two upright walls 74 to each other, which walls 74 constitute in that region, together with the lower wall 76 and the upper wall 77, a post-compression chamber 69 and constitute the abutment elements of the post-compression device 70. In this embodiment, the adjusting elements 71 are fastened to a carrier 72, which is capable of sliding telescopically relative to a first carrier portion 73, which is fixedly included in the machine and arranged in the longitudinal direction of the relevant compression channel. Per upright side wall portion 74 two adjusting elements 71 are arranged at some distance from each other. Between the two adjusting elements 71 on a side wall portion 74, round the compression channel, there is disposed a reinforcement construction connected to the two carriers 72. At the rear side of the post-compression device there is optionally disposed a door 75 capable of being pivoted from a position in which it is closing off the conveyor channel. In the telescoping parts 72, 73 there is disposed a hydraulic adjusting element in such a way that after operating same the post-compression device 70 is capable of being moved. For that purpose there is available in the telescopic device 72, 73 a set of catches constituting part of a sequence switch system of the machine, which set of catches is automatically controlled by the adjusting cylinder. By means of said catches the adjusting elements 71 are operated in such a way that a post-compressed bale 69A will be released, and the adjusting elements 72, 73 active in the telescopic device will have the post-compression device moved in forward direction. In the present embodiment, the adjusting cylinders are included in such a way that the post-compression device 70, because of the stroke function of the ram 9, against spring function, will be capable of being moved in rearward direction. The function of this embodiment is that the post-compression device 70 will move together with a bale already formed and tied, which bale is moving in a conventional manner through a compression channel, and will be moved by means of automatically controlled adjusting elements in upward direction when an already formed bale has been conveyed in the compression channel thus far that said bale is capable of being seized entirely by the upright walls 74. For the automatic control of the adjusting elements there is provided a sequence switch system in the machine.

The present embodiment has inter alia the advantage that a device for shortening and reknotting tying elements which are already disposed round a formed bale will be superfluous, and that the pressing function of the standard press will be improved by the increased resistance as a consequence of the presence of the post-compression device 70. Said resistance is constituted by the friction between a bale which is being post-compressed and the lower and upper wall 76 and 77 of the compression channel. In particular in the region of a post-compression device 70 said friction is increased by deflection of the material in vertical direction as a result of the compression pressure exerted by the adjusting elements 71. The tension on the tying elements 35 of a bale to be post-compressed is small, on the one hand due to the presence of a door 75 at the rear side of the compression channel, which door 75 is kept in an operative position via a locking element 76 connected to a carrier 72 and, on the other hand, at the front side due to the resistance of a later formed bale present in the compression channel, and the function of the ram 9.

The conventional part of the bale press, provided with upright side wall portions movable about an upright shaft 77 and via adjusting elements 78, is preferably arranged in such a way that the conveyor channel is capable of being narrowed to a greater or a lesser extent in rearward direction. The side wall portions 79 determine in that region a conventional compression chamber 80.

The present invention has the additional advantage that, if desired, the tying device can be accommodated in the post-compression chamber 69, which will lead to a properly fitting wrapping of a post-compressed bale.

The invention is not restricted to the aforementioned description, but also relates to all the details of the drawings. Furthermore, the invention relates to all kinds of alternatives in the construction, of course, being within the scope of the following claims.

## Claims

1. A bale press provided with a compression chamber (6, 37, 80) including a ram (9) for pressing material to be formed into a bale, which ram (9) is movable in a reciprocating manner, which bale press is provided with a tying device (35) for tying bales, **characterized in that** the tying device (35) is located in the region of a post-compression chamber (20, 57, 69) and is operative therein.

2. A bale press as claimed in claim 1, **characterized in that** the bale press is provided with a post-compression device (24, 44, 70) which performs one pressing stroke during the time when a bale is being formed in the compression chamber (6).

3. A bale press as claimed in claim 1 or 2, **characterized in that** a formed bale in the compression chamber (6) is post-compressed during a period of time corresponding approximately to the period of time in which a bale is being formed in the compression chamber (6).

4. A bale press as claimed in claim 1 or 2, **characterized in that** a formed bale is post-compressed during at least half the time in which a bale is being formed in the compression chamber (6).

5. A bale press as claimed in any one of the preceding claims, **characterized in that** the bale press is constituted by a mobile bale press provided with a pick-up member (1) for picking up crop lying on the ground.

6. A bale press as claimed in any one of the preceding claims, **characterized in that** the bale press is provided with displacing means (23, 25; 43) for displacing a bale in the bale press.

7. A bale press as claimed in any one of the preceding claims, **characterized in that** the bale press is provided with displacing means (23, 25) for displacing a formed bale (26) transversely to the direction of compression (13).

8. A bale press as claimed in claim 6 or 7, **characterized in that** the displacing means (23, 25) are active in horizontal direction.

9. A bale press as claimed in claim 6, 7 or 8, **characterized in that** the bale press is provided with detecting means for detecting an operational situation offering the condition for automatically activating the displacing means (23, 25; 43).

10. A bale press as claimed in claim 9, **characterized in that** the detecting means are produced for counting the number of strokes performed by the ram (9).

11. A bale press as claimed in claim 9 or 10, **characterized in that** the detecting means are produced for determining the degree of filling of the compression chamber (6, 37, 80).

12. A bale press as claimed in any one of the preceding claims 9 to 11, **characterized in that** the detecting means are produced for determining the pressure in the compression chamber (6, 37, 80).

13. A bale press as claimed in claim 2, **characterized in that** the post-compression device is provided with pressing means (71, 74) for post-compressing a bale transversely to the direction of the stroke (13) of the ram (9).

14. A bale press as claimed in any one of the preceding claims, **characterized in that** the bale press is provided with at least one pressing element (31, 46) operative in the longitudinal direction of a compression chamber (6) or a compression channel (36).

15. A bale press as claimed in any one of the preceding claims, **characterized in that** a compression chamber (6, 20, 57, 69) is provided with a counterpressure screen (18, 46, 75) extending transversely to the direction of compression (13).

16. A bale press as claimed in any one of the preceding claims, **characterized in that** a screen or wall portion (46, 75) arranged transversely to a relevant direction of compression is included in the bale press so as to be movable in such a manner that a bale (26) is capable of being removed from the further compression chamber (20) opposite to the direction of travel (A).

17. A bale press as claimed in any one of the preceding claims, **characterized in that** the further compression chamber (20, 57, 69) is provided with a movable floor for ejecting a formed bale in downward direction.

18. A bale press as claimed in any one of the preceding claims, **characterized in that** the compression time in the further compression chamber (20) corresponds at least nearly to the compression time in the compression chamber, reduced by the time required for tying a bale.

19. A bale press as claimed in any one of the preceding claims, **characterized in that** a bale is capable of being ejected transversely to the direction of compression (13).

20. A bale press as claimed in claim 19, **characterized in that** the ejection opening can be created by means of a wall (27) arranged transversely to the direction of displacement of a formed bale.

21. A bale press as claimed in claim 20, **characterized in that** near its upper side the wall (27) is pivotable about a shaft (29).

22. A bale press as claimed in any one of the preceding claims, **characterized in that** there is provided a pre-compression device (60) between a supply opening of the bale press for introducing material to be pressed into the bale press and the compression chamber (6).

23. A bale press as claimed in any one of the preceding claims, **characterized in that** the bale press is provided with a pre-compression device (60) by means of which the material to be pressed is pre-pressed in a direction transverse to the direction of movement (13) of the ram (9) and substantially in a column having the height and the width of the compression chamber (6) prior to being supplied to the compression chamber.

24. A bale press as claimed in any one of the preceding claims, **characterized in that** the bale press is provided with a post-compression device (70) movable in the longitudinal direction (13) of the compression channel.

25. A bale press as claimed in any one of the preceding claims, **characterized in that** the bale press is provided with a movable post-compression device (70) which is pushed ahead by a bale formed or to be formed in the relevant compression channel.

26. A bale press as claimed in any one of the preceding claims, **characterized in that** the bale press comprises a post-compression device provided with a vibrator device (33) in such a way that an at least almost constant high pressure is exerted in a vibrating manner on the bale to be post-compressed.

27. A bale press as claimed in any one of the preceding claims, **characterized in that** the bale press comprises a vibrator device (33) which is provided with an eccentric mechanism, in particular a motor-driven shaft, along the circumference of which there are provided one or more cams.

28. A bale press as claimed in claim 13, **characterized in that** the pressing element (31, 46, 74) is activated by means of an adjusting element (32, 53, 71) suitable for applying a constant high pressure.

29. A bale press as claimed in any one of the preceding claims, **characterized in that** there are provided means for pulling and reknotting tying means disposed around a pressed bale after the latter has been post-compressed.

30. A bale press as claimed in any one of the preceding claims, **characterized in that** the bale press comprises two or more post-compression chambers.

31. A bale press as claimed in any one of the preceding claims, **characterized in that** the bale press comprises adjusting means for adjusting the maximum length of the stroke of a pressing element of the post-compression device.

32. A bale press as claimed in any one of the preceding claims, **characterized in that** the bale press comprises adjusting means for adjusting the maximum time during which a pressing element of the post-compression device is active.

## Patentansprüche

1. Ballenpresse mit einer Preßkammer (6, 37, 80) und einem Preßkolben (9) zum Pressen von zu einem Ballen zu formendem Gut, wobei der Preßkolben (9) hin- und herbewegbar ist, wobei die Ballenpresse einen Bindeapparat (35) zum Binden von Ballen aufweist,
**dadurch gekennzeichnet, daß** der Bindeapparat (35) im Bereich einer Nachpreßkammer (20, 57, 69) angeordnet und in dieser wirksam ist.

2. Ballenpresse nach Anspruch 1,
**dadurch gekennzeichnet, daß** die Ballenpresse mit einer Nachverdichtungsvorrichtung (24, 44, 70) versehen ist, die in der Zeit, in der ein Ballen in der Preßkammer (6) geformt wird, eine Preßbewegung ausführt.

3. Ballenpresse nach Anspruch 1 oder 2,
**dadurch gekennzeichnet, daß** ein in der Preßkammer (6) geformter Ballen innerhalb eines Zeitraumes nachverdichtet wird, der etwa dem Zeitraum entspricht, in dem ein Ballen in der Preßkammer (6) geformt wird.

4. Ballenpresse nach Anspruch 1 oder 2,
**dadurch gekennzeichnet, daß** ein geformter Ballen in mindestens der Hälfte der Zeit nachverdichtet wird, in der ein Ballen in der Preßkammer (6) geformt wird.

5. Ballenpresse nach einem der vorhergehenden Ansprüche,
**dadurch gekennzeichnet, daß** die Ballenpresse durch eine verfahrbare Ballenpresse gebildet ist, die mit einer Pick-up-Trommel (1) zum Aufnehmen von auf dem Boden liegendem Erntegut versehen ist.

6. Ballenpresse nach einem der vorhergehenden Ansprüche,
**dadurch gekennzeichnet, daß** die Ballenpresse mit einer Verlagerungsvorrichtung (23, 25; 43) zum Transportieren eines Ballens in der Ballenpresse versehen ist.

7. Ballenpresse nach einem der vorhergehenden Ansprüche,
**dadurch gekennzeichnet, daß** die Ballenpresse mit einer Verlagerungsvorrichtung (23, 25) versehen ist, um einen geformten Ballen (26) quer zur Preßrichtung (13) zu transportieren.

8. Ballenpresse nach Anspruch 6 oder 7,
**dadurch gekennzeichnet, daß** die Verlagerungsvorrichtung (23, 25) in horizontaler Richtung wirksam ist.

9. Ballenpresse nach Anspruch 6, 7 oder 8,
**dadurch gekennzeichnet, daß** die Ballenpresse mit einer Ermittlungsvorrichtung versehen ist, um eine Betriebssituation zu ermitteln, die die Bedingung zur automatischen Aktivierung der Verlagerungsvorrichtung (23, 25; 43) erfüllt.

10. Ballenpresse nach Anspruch 9,
**dadurch gekennzeichnet, daß** die Ermittlungsvorrichtung dazu ausgelegt ist, die Anzahl der von dem Preßkolben (9) ausgeführten Hubbewegungen zu zählen.

11. Ballenpresse nach Anspruch 9 oder 10,
**dadurch gekennzeichnet, daß** die Ermittlungsvorrichtung dazu ausgelegt ist, den Füllungsgrad der Preßkammer (6, 37, 80) zu ermitteln.

12. Ballenpresse nach einem der vorhergehenden Ansprüche 9 bis 11,
**dadurch gekennzeichnet, daß** die Ermittlungsvorrichtung dazu ausgelegt ist, den Druck in der Preßkammer (6, 37, 80) zu ermitteln.

13. Ballenpresse nach Anspruch 2,
**dadurch gekennzeichnet, daß** die Nachverdichtungsvorrichtung mit einer Druckvorrichtung (71, 74) versehen ist, um einen Ballen quer zur Hubrichtung (13) des Preßkolbens (9) nachzuverdichten.

14. Ballenpresse nach einem der vorhergehenden Ansprüche,
**dadurch gekennzeichnet, daß** die Ballenpresse mit mindestens einem Druckelement (31, 46) versehen ist, das in Längsrichtung einer Preßkammer (6) oder eines Preßkanals (36) wirksam ist.

15. Ballenpresse nach einem der vorhergehenden Ansprüche,
**dadurch gekennzeichnet, daß** eine Preßkammer (6, 20, 57, 69) mit einer Gegendruckplatte (18, 46, 75) versehen ist, die sich quer zur Preßrichtung (13) erstreckt.

16. Ballenpresse nach einem der vorhergehenden Ansprüche,
**dadurch gekennzeichnet, daß** eine quer zu einer jeweiligen Preßrichtung angeordnete Platte oder ein Wandteil (46; 75) in der Ballenpresse vorhanden und derart bewegbar ist, daß ein Ballen (26) in zur Arbeitsrichtung (A) entgegengesetzter Richtung aus der weiteren Preßkammer (20) entfernt werden kann.

17. Ballenpresse nach einem der vorhergehenden Ansprüche,
**dadurch gekennzeichnet, daß** die weitere Preßkammer (20, 57, 69) mit einem bewegbaren Boden versehen ist, um einen geformten Ballen nach unten auszuwerfen.

18. Ballenpresse nach einem der vorhergehenden Ansprüche,
**dadurch gekennzeichnet, daß** die Verdichtungszeit in der weiteren Preßkammer (20) mindestens annähernd der Verdichtungszeit in der Preßkammer abzüglich der zum Binden eines Ballens benötigten Zeit entspricht.

19. Ballenpresse nach einem der vorhergehenden Ansprüche,
**dadurch gekennzeichnet, daß** ein Ballen quer zur Preßrichtung (13) ausgeworfen werden kann.

20. Ballenpresse nach Anspruch 19,
**dadurch gekennzeichnet, daß** die Auswurföffnung durch eine Wand (27) gebildet werden kann, die quer zur Transportrichtung eines geformten Ballens angeordnet ist.

21. Ballenpresse nach Anspruch 20,
**dadurch gekennzeichnet, daß** die Wand (27) nahe ihrer Oberseite um eine Achse (29) schwenkbar ist.

22. Ballenpresse nach einem der vorhergehenden Ansprüche,
**dadurch gekennzeichnet, daß** zwischen einer Zuführöffnung der Ballenpresse zum Einleiten von zu pressendem Gut in die Ballenpresse und der Preßkammer (6) eine Vorverdichtungsvorrichtung (60) angeordnet ist.

23. Ballenpresse nach einem der vorhergehenden Ansprüche,
**dadurch gekennzeichnet, daß** die Ballenpresse mit einer Vorverdichtungsvorrichtung (60) versehen ist, mittels der das zu pressende Gut in einer quer zur Bewegungsrichtung (13) des Preßkolbens (9) verlaufenden Richtung und im wesentlichen zu einer Säule vorverdichtet wird, die die Höhe und Breite der Preßkammer (6) hat, bevor das Gut der Preßkammer zugeführt wird.

24. Ballenpresse nach einem der vorhergehenden Ansprüche,
**dadurch gekennzeichnet, daß** die Ballenpresse mit einer Nachverdichtungsvorrichtung (70) versehen ist, die in Längsrichtung (13) des Preßkanals bewegbar ist.

25. Ballenpresse nach einem der vorhergehenden Ansprüche,
**dadurch gekennzeichnet, daß** die Ballenpresse mit einer beweglichen Nachverdichtungsvorrichtung (70) versehen ist, die von einem geformten oder zu formenden Ballen in dem jeweiligen Preßkanal nach vorn gedrückt wird.

26. Ballenpresse nach einem der vorhergehenden Ansprüche,
**dadurch gekennzeichnet, daß** die Ballenpresse eine Nachverdichtungsvorrichtung umfaßt, die mit einer Rüttelvorrichtung (33) versehen ist, so daß ein mindestens annähernd konstanter hoher Druck in vibrierender Weise auf den nachzuverdichtenden Ballen ausgeübt wird.

27. Ballenpresse nach einem der vorhergehenden Ansprüche,
**dadurch gekennzeichnet, daß** die Ballenpresse eine Rüttelvorrichtung (33) umfaßt, die mit einem Exzenter, insbesondere mit einer motorisch angetriebenen Welle, versehen ist, an deren Umfang ein oder mehrere Nocken angeordnet sind.

28. Ballenpresse nach Anspruch 13,
**dadurch gekennzeichnet, daß** das Druckelement (31, 46, 74) mittels eines Stellgliedes (32, 53, 71) aktiviert wird, das geeignet ist, einen konstanten hohen Druck auszuüben.

29. Ballenpresse nach einem der vorhergehenden Ansprüche,
**dadurch gekennzeichnet, daß** eine Vorrichtung vorhanden ist, um Bindemittel zu ziehen und erneut zu verknüpfen, die um einen gepreßten Ballen herum angeordnet sind, nachdem dieser nachverdichtet worden ist.

30. Ballenpresse nach einem der vorhergehenden Ansprüche,
**dadurch gekennzeichnet, daß** die Ballenpresse zwei oder mehr Nachpreßkammern umfaßt.

31. Ballenpresse nach einem der vorhergehenden Ansprüche,
**dadurch gekennzeichnet, daß** die Ballenpresse eine Stellvorrichtung umfaßt, um die maximale Länge des Hubes eines Druckelementes der Nachverdichtungsvorrichtung einzustellen.

32. Ballenpresse nach einem der vorhergehenden Ansprüche,
**dadurch gekennzeichnet, daß** die Ballenpresse eine Stellvorrichtung umfaßt, um die maximale Zeit einzustellen, in der ein Druckelement der Nachverdichtungsvorrichtung wirksam ist.

## Revendications

1. Presse à balles pourvue d'une chambre de compression (6, 37, 80) comprenant un piston (9) pour presser les matériaux et les compacter en forme de balle, lequel piston (9) est animé d'un mouvement de va-et-vient, laquelle presse à balles est pourvue d'un dispositif de liage (35) pour lier les balles, **caractérisé en ce que** le dispositif de liage (35) est situé dans la zone d'une chambre de post-compression (20, 57, 69), et y opère à l'intérieur.

2. Presse à balles selon la revendication 1, **caractérisée en ce que** la presse à balles est pourvue d'un dispositif de post-compression (24, 44, 70) qui réalise un cycle de presse pendant qu'une balle se forme dans la chambre de compression (6).

3. Presse à balles selon la revendication 1 ou 2, **caractérisée en ce qu'**une balle formée dans la chambre de compression (6) est post-compressée durant un laps de temps correspondant approximativement au laps de temps pendant lequel une balle est en train d'être formée dans la chambre de compression (6).

4. Presse à balles selon la revendication 1 ou 2, **caractérisée en ce qu'**une balle formée est post-compressée durant au minimum la moitié du temps pendant lequel une balle est en train d'être formée dans la chambre de compression (6).

5. Presse à balles selon l'une quelconque des revendications précédentes, **caractérisée en ce que** la presse à balles est constituée d'une presse à balles mobile pourvue d'un organe de ramassage (1) pour ramasser la récolte répandue sur le sol.

6. Presse à balles selon l'une quelconque des revendications précédentes, **caractérisée en ce que** la presse à balles est pourvue de moyens de déplacement (23, 25, 43) pour déplacer une balle dans la presse à balles.

7. Presse à balles selon l'une quelconque des revendications précédentes, **caractérisée en ce que** la presse à balles est pourvue de moyens de déplacement (23, 25) pour déplacer une balle formée (26) transversalement à la direction de compression (13).

8. Presse à balles selon les revendications 6 ou 7, **caractérisée en ce que** les moyens de déplacement (23, 25) fonctionnent à l'horizontale.

9. Presse à balles selon les revendications 6, 7 ou 8, **caractérisée en ce que** la presse à balles est pourvue de moyens de détection pour détecter une situation opérationnelle offrant les conditions pour activer automatiquement les moyens de déplacement (23, 25, 43).

10. Presse à balles selon la revendication 9, **caractérisée en ce que** les moyens de détection sont conçus pour compter le nombre de courses réalisées par le piston (9).

11. Presse à balles selon les revendications 9 ou 10, **caractérisée en ce que** les moyens de détection sont conçus pour déterminer le degré de remplissage de la chambre de compression (6, 37, 80).

12. Presse à balles selon l'une quelconque des revendications précédentes 9 à 11, **caractérisée en ce que** les moyens de détection sont conçus pour déterminer la pression dans la chambre de compression (6, 37, 80).

13. Presse à balles selon la revendication 2, **caractérisée en ce que** le dispositif de post-compression est pourvu de moyens de presse (71, 74) pour post-compresser une balle transversalement à la direction de la course (13) du piston (9).

14. Presse à balles selon l'une quelconque des revendications précédentes, **caractérisée en ce que** la presse à balles est pourvue au minimum d'un élément de presse (31, 46) opérant dans la direction longitudinale d'une chambre de compression (6) ou d'un canal de compression (36).

15. Presse à balles selon l'une quelconque des revendications précédentes, **caractérisée en ce qu'**une chambre de compression (6, 20, 57, 69) est pourvue d'un écran de contre-pression (18, 46, 75) s'étendant transversalement à la direction de compression (13).

16. Presse à balles selon l'une quelconque des revendications précédentes, **caractérisée en ce qu'**un écran ou partie de cloison (46, 75) disposé transversalement à une direction de compression appropriée est compris dans la presse à balles de sorte qu'il puisse bouger d'une façon qui permette d'enlever une balle (26) de la chambre de compression additionnelle (20) à l'opposé de la direction du déplacement (A).

17. Presse à balles selon l'une quelconque des revendications précédentes, **caractérisée en ce que** la chambre de compression additionnelle (20, 57, 69) est pourvue d'un plancher mobile pour éjecter vers le bas une balle formée.

18. Presse à balles selon l'une quelconque des revendications précédentes, **caractérisée en ce que** le temps de compression dans la chambre de compression additionnelle (20) correspond au minimum à peu près au temps de compression dans la chambre de compression, diminué du temps requis pour lier une balle.

19. Presse à balles selon l'une quelconque des revendications précédentes, **caractérisée en ce qu'**une balle peut être éjectée transversalement à la direction de compression (13).

20. Presse à balles selon la revendication 19, **caractérisée en ce que** l'ouverture pour l'éjection peut être créée au moyen d'une cloison (27) disposée transversalement à la direction de déplacement d'une balle formée.

21. Presse à balles selon la revendication 20, **caractérisée en ce que**, près de son bord supérieur, la cloison (27) peut pivoter autour d'un axe (29).

22. Presse à balles selon l'une quelconque des revendications précédentes, **caractérisée en ce qu'**il est aménagé un dispositif de pré-compression (60) entre une ouverture d'alimentation de la presse à balles pour introduire les matériaux devant être pressés dans la presse à balles, et la chambre de compression (6).

23. Presse à balles selon l'une quelconque des revendications précédentes, **caractérisée en ce que** la presse à balles est pourvue d'un dispositif de pré-compression (60) au moyen duquel les matériaux devant être pressés sont pré-compressés selon une direction transverse à la direction du mouvement (13) du piston (9) et substantiellement en une colonne ayant la hauteur et la largeur de la chambre de compression (6) avant d'être envoyés à la chambre de compression.

24. Presse à balles selon l'une quelconque des revendications précédentes, **caractérisée en ce que** la presse à balles est pourvue d'un dispositif de post-compression (70) mobile selon la direction longitudinale (13) du canal de compression.

25. Presse à balles selon l'une quelconque des précédentes revendications, **caractérisée en ce que** la presse à balles est pourvue d'un dispositif mobile de post-compression (70) qui est poussé en avant par une balle formée ou à former dans le canal de compression approprié.

26. Presse à balles selon l'une quelconque des revendications précédentes, **caractérisée en ce que** la presse à balles comprend un dispositif de post-compression pourvu d'un dispositif vibreur (33) tel qu'une haute pression au minimum presque constante est exercée en mode vibratoire sur la balle à post-compresser.

27. Presse à balles selon l'une quelconque des revendications précédentes, **caractérisée en ce que** la presse à balles comprend un dispositif vibreur (33) pourvu d'un mécanisme excentrique, en particulier un axe entraîné par un moteur, sur la circonférence duquel sont disposées une ou plusieurs cames.

28. Presse à balles selon la revendication 13, **caractérisée en ce que** l'élément de presse (31, 46, 74) est activé au moyen d'un élément de réglage (32, 53, 71) approprié pour l'application d'une haute pression constante.

29. Presse à balles selon l'une quelconque des revendications précédentes, **caractérisée en ce qu'**il y a des moyens mis en place pour tirer et renouer les moyens de liage disposés autour d'une balle pressée après que cette dernière aura été post-compressée.

30. Presse à balles selon l'une quelconque des revendications précédentes, **caractérisée en ce que** la presse à balles comprend deux chambres de post-compression, ou plus.

31. Presse à balles selon l'une quelconque des revendications précédentes, **caractérisée en ce que** la presse à balles comprend des moyens de réglage pour régler la longueur maximum de la course d'un élément de presse du dispositif de post-compression.

32. Presse à balles selon l'une quelconque des revendications précédentes, **caractérisée en ce que** la presse à balles comprend des moyens de réglage pour régler le temps maximum pendant lequel un élément de presse du dispositif de post-compression est actif.
